# FASCICULE DE BREVET EUROPEEN

(11) **EP 2 220 362 B1**
(45) Date de publication et mention de la délivrance du brevet: **16.08.2017**
(21) Numéro de dépôt: 08853460.7
(22) Date de dépôt: 14.11.2008
(51) Int. Cl.: F03B 3/06, F03B 3/18, F03B 11/00, F04D 15/00

(54) **INSTALLATION HYDRAULIQUE DE CONVERSION D'ÉNERGIE ET PROCÉDÉ DE COMMANDE D'UNE TELLE INSTALLATION**
ENERGIEUMWANDLUNGSHYDRAULIKANLAGE UND VERFAHREN ZUR STEUERUNG SOLCH EINER ANLAGE
ENERGY CONVERSION HYDRAULIC PLANT AND METHOD FOR CONTROLLING SUCH PLANT

(30) Priorité: 14.11.2007 FR 0759023
(43) Date de publication de la demande: 25.08.2010
(73) Titulaire: GE Renewable Technologies, 38100 Grenoble (FR)
(72) Inventeur: COUSTON, Michel Henri, F-38180 Seyssins (FR); SABOURIN, Michel, Sorel-Tracy, Quebec (CA)
(74) Mandataire: Brannen, Joseph Waclaw
(86) Numéro de dépôt international: PCT/FR2008/052054
(87) Numéro de publication internationale: WO 2009/068828

(56) Documents cités:
- WO-A-2006/035119
- WO-A-2006/053878
- FR-A- 789 467
- US-A1- 2005 069 413

## Description

La présente invention a trait à une installation hydraulique de conversion d'énergie hydraulique en énergie mécanique ou électrique ou réciproquement qui comprend une machine, de type turbine, pompe ou turbine-pompe et dans laquelle est défini un chemin hydraulique d'écoulement forcé d'eau.

Il est connu de concevoir une telle installation hydraulique en fonction d'un point de fonctionnement nominal qui dépend, par exemple, de la hauteur de chute et de la puissance recherchée en sortie de l'installation. En pratique, l'efficacité d'une turbine et son comportement dynamique sont largement influencés par les conditions hydrauliques, telles que les niveaux d'eau et les débits qui transitent dans les lacs et rivières au voisinage desquels est installée une turbine, ainsi que les besoins d'exploitation qui déterminent la quantité d'eau traversant la turbine. Or, la conception des différents conduits hydrauliques d'une installation est adaptée principalement à un point de fonctionnement et peut s'avérer mal adaptée à certains régimes, notamment dans le cas d'une installation réhabilitée par la mise en place d'une nouvelle turbine.

Il est connu, par exemple de WO-A-2006/035119 ou de WO-2006/053878 de disposer un corps souple autour de la partie tournante d'une turbine afin d'augmenter la distance radiale entre les pales de la turbine et le manteau de roue en cas d'écoulement de débit important. Cette augmentation de distance radiale crée une zone d'écoulement d'eau sans interaction avec la turbine, ce qui induit une diminution du rendement de l'installation. Il est également connu de US-A-2005/0069413 d'équiper le moyeu tournant d'une turbine avec un soufflet dilatable qui permet de réduire la zone d'écoulement d'eau autour de ce moyeu. En configuration aplatie de ce soufflet, les tourillons de base des pales dépassent du moyeu, de sorte que la partie de l'écoulement qui lèche le moyeu n'interagit pas avec les portions incurvées des pales. Ceci diminue donc le rendement de l'installation.

En outre, dans les installations pourvues d'un conduit d'écoulement aval, parfois dénommé « aspirateur » à cause de sa forme divergente dans le sens d'écoulement, il arrive que l'écoulement forcé ne remplisse pas totalement le conduit, ce qui induit des phénomènes de décollement de l'écoulement par rapport à la surface du conduit à certains régimes.

Des problèmes analogues se posent avec les pompes et les turbines-pompes.

C'est à ces inconvénients qu'entend plus particulièrement remédier l'invention en proposant une installation qui peut fonctionner de façon optimisée à différents régimes.

A cet effet, l'invention concerne une installation hydraulique définissant au moins un chemin d'écoulement forcé d'eau et comprenant au moins une machine, de type turbine, pompe ou turbine-pompe, un organe pourvu d'au moins une paroi déformable et délimitant au moins un volume fermé de taille variable et des moyens d'alimentation du volume fermé en fluide sous pression. Cette installation est caractérisée en ce que l'organe à paroi déformable est monté dans un conduit hydraulique situé en aval d'une partie tournante de la machine et en ce que la paroi déformable définit, localement et en aval de la partie tournante, une section modulable de passage de l'écoulement dans le conduit hydraulique.

Grâce à l'invention, il est possible d'adapter la géométrie du conduit hydraulique d'écoulement forcé de l'eau, en aval de la partie tournante de la machine, selon le point de fonctionnement sélectionné pour l'installation, ce qui permet d'optimiser le comportement et les performances de l'installation sur une large plage de fonctionnement. L'invention est applicable aux installations réhabilitées ainsi qu'aux installations neuves. Tous les types de turbines hydrauliques peuvent être concernés par l'invention, notamment les turbines Francis, les turbines Kaplan, les turbines dites "hélices" ou "diagonales", les turbines à bulbe ainsi que les pompes et turbines-pompes. Pour toutes ces machines, l'organe à paroi déformable est disposé en aval d'une partie tournante, par exemple des pales d'une turbine Kaplan.

Au sens de l'invention, une machine hydraulique est la partie d'une installation dans laquelle a lieu le transfert d'énergie entre l'écoulement et une partie tournante. Une telle machine n'inclut pas les conduites d'amenée et d'évacuation de l'écoulement. Un exemple de partie tournante d'une machine est la roue d'une turbine Francis.

Avec la possibilité de moduler la forme d'une paroi définissant la section de passage du conduit hydraulique dans certaines zones aval de l'installation, on peut améliorer non seulement l'efficacité globale de l'installation mais également diminuer les fluctuations de pression, les oscillations de puissance, les phénomènes de cavitation, de dissolution d'oxygène, les bruits et les vibrations générés par la rotation de la partie tournante. L'invention permet également d'améliorer la stabilité de l'installation et d'influer positivement sur la vitesse d'emballement et la vitesse de pointe de la partie tournante, ainsi que sur sa capacité à se laisser traverser par des animaux vivants, parfois dénommée "fish friendly capacity".

Le fait que l'organe à paroi déformable est logé dans le conduit en aval de la roue permet de contrôler l'écoulement dans ce conduit aval pour supprimer, ou limiter dans une large mesure, les phénomènes de décollement de l'écoulement. La mise en oeuvre de l'organe à paroi déformable améliore le fonctionnement de la machine hydraulique. En particulier, il permet de diminuer les pertes fluides occasionnées par des phénomènes locaux, quand ils se produisent.

Selon des aspects avantageux mais non obligatoires de l'invention, une telle installation peut incorporer une ou plusieurs des caractéristiques suivantes, prises dans toutes combinaisons techniquement admissibles :
- L'organe précité comprend au moins une membrane déformable fixée sur un élément structurel de l'installation et qui définit avec cet élément le volume fermé de taille variable. Le fluide sous pression permet de gonfler la ou les membranes pour constituer une paroi à configuration variable.
- En variante, l'organe précité est formé par au moins un ballon formé par une membrane déformable et délimitant à lui seul le volume fermé de taille variable.
- Au moins une attache relie avantageusement une zone médiane de la membrane et l'élément structurel ou deux zones de la membrane entre elles, cette attache étant apte à limiter la déformation de la membrane sous l'effet de la pression du fluide présent dans le volume fermé.
- L'organe à paroi déformable délimite plusieurs volumes fermés de taille variable alimentés en fluide sous pression indépendamment les uns des autres.
- L'organe à paroi déformable est monté sur une partie fixe de l'installation. Il peut être disposé au niveau d'un coude formé par le conduit hydraulique aval, sur sa portion externe ou sur sa portion interne. En variante, l'organe à paroi déformable est disposé en amont ou en aval du coude.
- Le conduit hydraulique situé en aval de la partie tournante est au moins en partie divergent.
- Les moyens d'alimentation du volume fermé délimité par l'organe de régulation comprennent au moins un canal reliant une source commandée d'eau sous pression à ce volume fermé. En variante, ces moyens comprennent au moins un canal reliant une source commandée d'un fluide sous pression autre que de l'eau à ce volume fermé.
- Il est prévu des moyens d'évacuation du fluide sous pression à partir du volume fermé délimité par l'organe de régulation.

L'invention concerne également un procédé de commande d'une installation telle que décrite ci-dessus et, plus spécifiquement, un procédé qui comprend une étape consistant à injecter un fluide sous pression dans au moins un volume fermé délimité par un organe pourvu d'au moins une paroi déformable et disposé dans un conduit hydraulique situé en aval d'une partie tournante de la machine, de façon à moduler une section de passage de l'écoulement forcé dans ce conduit hydraulique, en aval de la partie tournante.

Grâce au procédé de l'invention, on peut agir sur la géométrie d'un conduit d'écoulement, en fonction du point de fonctionnement sélectionné pour l'installation, de façon à optimiser ses performances.

L'invention sera mieux comprise et d'autres avantages de celle-ci apparaîtront plus clairement à la lumière de la description qui va suivre de trois modes de réalisation d'une l'installation conforme à son principe, donnée uniquement à titre d'exemple et faite en référence aux dessins annexés dans lesquels :
- la figure 1 est une représentation schématique de principe, en section axiale, d'une installation conforme à un premier mode de réalisation de l'invention ;
- la figure 2 est une vue à plus grande échelle du détail Il à la figure 1 ;
- la figure 3 est une vue analogue à la figure 2 lorsque l'installation est dans une autre configuration de fonctionnement ;
- la figure 4 est une vue analogue à la figure 2 pour une installation conforme à un deuxième mode de réalisation de l'invention ; et
- la figure 5 est une vue analogue à la figure 2 pour une installation conforme à un troisième mode de réalisation de l'invention ;

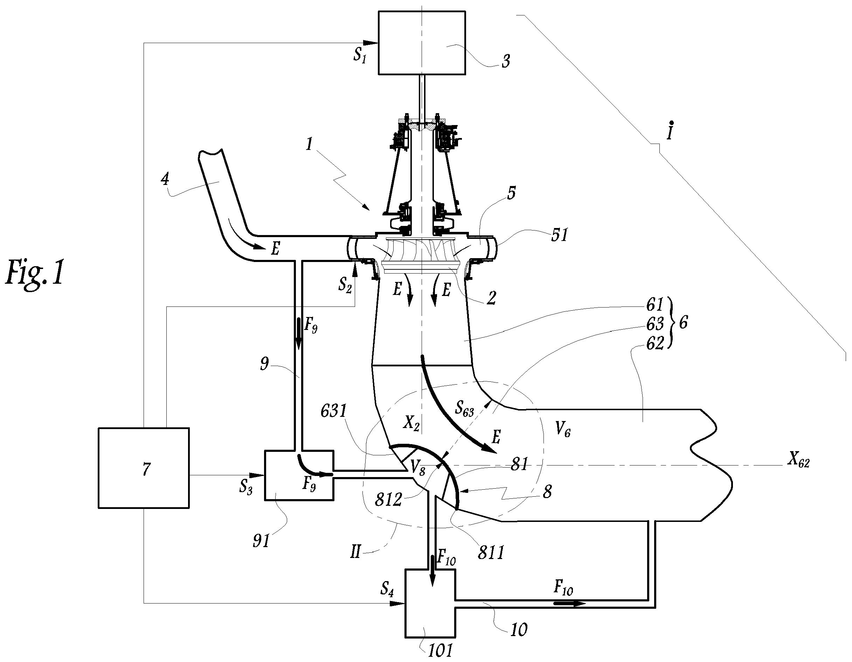

L'installation I représentée aux figures 1 à 3 comprend une turbine 1 de type Francis dont la roue 2 est destinée à être mise en rotation par un écoulement forcé E provenant d'une retenue d'eau non représentée. La roue 2 constitue une partie tournante de la turbine 1. La turbine 1 est couplée à un alternateur 3 qui délivre un courant alternatif à un réseau non représenté, en fonction de la rotation de la roue 2. L'installation I permet donc de convertir l'énergie hydraulique de l'écoulement E en énergie électrique. Une conduite forcée 4 permet d'amener l'écoulement E à la roue 2 et s'étend entre la retenue d'eau et une bâche 5 équipée de directrices 51 permettant de réguler en partie l'écoulement E. Un conduit 6 est prévu en aval de la roue 2 pour évacuer l'écoulement E en aval de l'installation I et le renvoyer vers une rivière dans laquelle il est prélevé.

Les éléments 4, 5 et 6 définissent ensemble un chemin hydraulique pour l'écoulement E.

Une unité de commande 7 est prévue pour piloter la turbine 1 en fonction, notamment, des besoins en électricité du réseau alimenté à partir de l'alternateur 4. L'unité 7 est capable de définir plusieurs points de fonctionnement de l'installation I et d'adresser, respectivement à l'alternateur 3 et aux directrices 51 des signaux de commande S₁, S₂.

Le conduit 6 comprend une partie amont 61 sensiblement verticale et centrée sur l'axe de rotation X₂ de la roue 2, une partie aval 62 centrée sur un axe X₆₂ légèrement ascendant selon le sens de l'écoulement E, ainsi qu'un coude 63 reliant les parties 61 et 62. On note V₆ le volume intérieur du conduit 6.

Le conduit 6 peut être qualifié de « aspirateur » dans la mesure où il est divergent sur une partie au moins de sa longueur, dans le sens de l'écoulement E, c'est-à-dire que l'aire de sa section transversale augmente dans le sens de cet écoulement. Ce caractère divergent pourrait induire des phénomènes de décollement de l'écoulement E par rapport aux surfaces internes du conduit 6, notamment au niveau du coude 63. Ces phénomènes perturberaient alors le transit de l'eau dans le conduit 6, en particulier à cause de la recirculation d'eau dans les zones turbulentes.

Un organe 8 de modulation de l'écoulement E dans le conduit 6 est disposé sur la portion externe 631 du coude 63. Cet organe de modulation comprend une membrane déformable 81 fixée le long de sa périphérie 811 sur la paroi 631. Il est ainsi défini entre la paroi 631 et la face 812 de la membrane 81 dirigée vers cette paroi, un volume V₈ fermé, en ce sens qu'il est isolé du reste du volume intérieur V₆ par la membrane 81.

L'installation I comprend également un tuyau 9, qui forme un canal et relie la conduite 4 au volume V₈. Ce tuyau est équipé d'un module 91 formant vanne de contrôle de la circulation d'eau dans le tuyau 9, cette circulation d'eau étant représentée par les flèches F₉. Le module 91 est commandé par l'unité 7 au moyen d'un signal approprié S₃.

Il est ainsi possible d'injecter de l'eau dans le volume V₈, en faisant circuler de l'eau dans le tuyau 9, comme représenté par les flèches F₉. Le module 91 forme, pour l'organe 8, une source commandée d'eau sous pression qui permet de mettre en pression le volume V₈.

Par ailleurs, un tuyau 10 permet d'évacuer, lorsque cela est nécessaire, l'eau présente dans le volume V₈ en direction de la partie aval 62 du conduit 6. Le tuyau 10 est équipé d'un module 101 contrôlant l'écoulement d'eau dans le tuyau 10, cet écoulement étant représenté par les flèches F₁₀. Le module 101 est commandé par l'unité 7 au moyen d'un signal approprié S₄.

Il est ainsi possible de piloter, grâce à l'unité 7, la pression de l'eau présente dans le volume V₈ et, par voie de conséquence, la géométrie de la membrane 81 qui définit la section de passage S₆₃ du coude 63, c'est-à-dire la géométrie du conduit 6 dans la zone du coude 63.

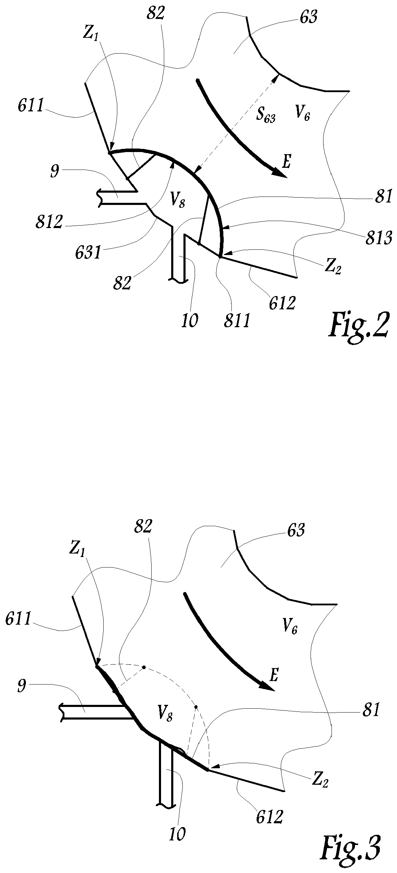

Comme il ressort de la comparaison des figures 2 et 3, la membrane est souple au point de passer d'une configuration représentée à la figure 3, où elle est plaquée par l'écoulement E contre la portion 631, à la configuration de la figure 2 où elle forme, vu du côté de l'écoulement E dans le conduit 6, une surface convexe. La section de passage S₆₃ de l'écoulement E peut donc être modulée, en fonction de l'alimentation du volume V₈ en eau sous pression à partir de la conduite 4, entre la valeur représentée à la figure 3 et celle représentée à la figure 2.

Des valeurs intermédiaires peuvent être obtenues moyennant une commande adaptée des modules 91 et 101 grâce aux signaux S₃ et S₄.

A la figure 3, on a représenté en traits pointillés, la trace de la membrane 81 dans la configuration de la figure 2.

La diminution de l'aire de la section S₆₃, lorsque la membrane 81 passe de la configuration de la figure 3 à celle de la figure 2, permet d'accélérer l'écoulement E dans le coude 63, ce qui s'avère avantageux dans certaines configurations de fonctionnement de la turbine 1, notamment pour éviter les phénomènes de décollement de l'écoulement E. Le passage de la membrane 81 de la configuration de la figure 3 à celle de la figure 2 permet également de modifier la direction de l'écoulement E dans le coude 3, ce qui peut également s'avérer avantageux.

Par un choix judicieux de l'emplacement de l'organe 8 dans le conduit 6, il est possible de faire évoluer, par le gonflage ou le dégonflage de cet organe, la loi de section qui influence les vitesses moyennes et locales de l'écoulement E.

L'organe 8 permet donc de réguler ou de moduler l'écoulement E en vitesse et/ou en direction par un pilotage approprié des modules 91 et 101 et ce, sans dégrader le rendement global de l'installation I car la turbine 1 fonctionne avec, à son niveau, un chemin pour l'écoulement E qui reste en permanence conforme au chemin nominal. En d'autres termes, la modulation de l'écoulement E, grâce à l'organe 8 placé dans le conduit 6, ne perturbe pas le fonctionnement de la turbine 1. Cette modulation de l'écoulement E induit une modification locale du champ de vitesses de l'écoulement E, sans modification sensible de son débit total.

On note respectivement 611 et 621 les parois des parties 61 et 62 au voisinage de l'organe 8. La géométrie et le positionnement de la membrane 81 sont choisis pour assurer une bonne continuité entre la face externe 813 de la membrane 81, c'est-à-dire sa face dirigée à l'opposé du volume V₈, par rapport aux parois 611 et 621, ce qui évite de créer des turbulences dans les zones de transition Z₁ et Z₂ entre l'organe 8 et les parties 61 et 62 du conduit 6.

Pour contrôler efficacement la forme de l'organe 8 dans la configuration complètement remplie du volume 8, des attaches flexibles 82 formant haubans s'étendent entre la membrane 81 et la paroi 631 et limitent la déformation de la membrane 81 sous l'effet de la pression dans le volume V₈, dans un sens de restriction de la section S₆₃.

Si, en fonction des conditions de fonctionnement de l'installation I, la membrane 81 doit être rapprochée de la surface 631 pour augmenter la section S₆₃, le module 91 est commandé pour arrêter ou limiter l'écoulement F₉ dans le tuyau 9, alors que le module 101 est commandé pour augmenter l'écoulement F₁₀ dans le tuyau 10. Selon une variante non représentée de l'invention, le tuyau 10 peut être raccordé à une pompe d'aspiration.

La membrane 81 peut être étanche mais ceci n'est pas indispensable dans la mesure où la fonction de l'organe 8 est compatible avec une légère fuite du volume V₈ vers le volume V₆, pour autant que la pression de l'eau dans le volume V₈ est suffisante pour maintenir la membrane 81 dans une position déterminée par l'unité 7, sans que cette membrane ne vibre du fait du caractère turbulent de l'écoulement E dans le coude 63.

Le matériau utilisé pour constituer la membrane 81 doit être souple, fin et solide. Il doit en particulier résister à la tension résultant de la pression d'eau dans le volume V₈. Un matériau composite peut être utilisé à cet effet, par exemple un matériau à base de fibres Kevlar (marque déposée). On peut également envisager qu'une membrane élastique ou peu élastique puisse être utilisée, voire une combinaison de membranes d'élasticités différentes, ces membranes étant disposées pour réaliser des formes de parois optimales.

Les liens ou attaches 82 peuvent être formées par des cordes, des câbles, ou des bandes de tissu. Ils ne s'étendent que sur une faible partie de largeur du volume V₈ afin de ne pas gêner la répartition de l'eau dans ce volume.

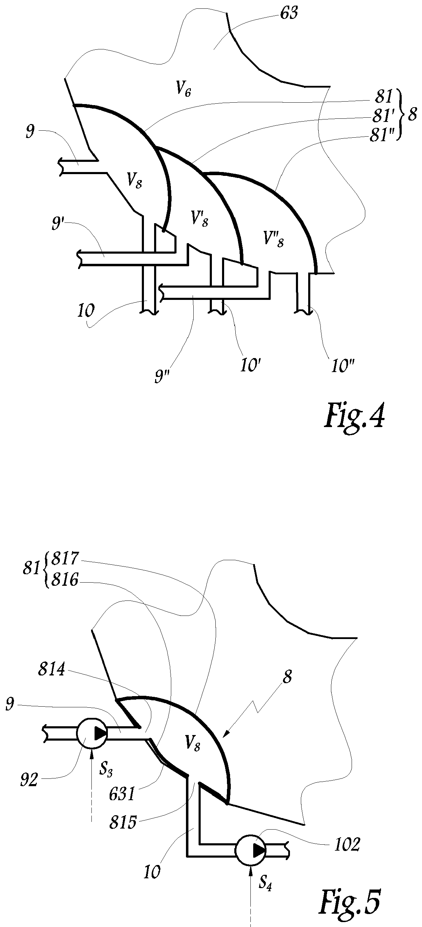

Dans le second mode de réalisation de l'invention représenté à la figure 4, les éléments analogues à ceux du premier mode de réalisation portent des références identiques. Dans ce mode de réalisation, l'organe 8 est formé de trois membranes 81, 81' et 81" qui définissent trois volumes V₈, V'₈ et V"₈ alimentés chacun par un conduit 9, 9' et 9" du type du conduit 9 du premier mode de réalisation. Ainsi, selon le ou les volumes V₈, V'₈ et V"₈ alimentés en eau sous pression, différentes géométries de l'organe 8 peuvent être obtenues, ce qui permet de réguler de différentes façons l'écoulement E dans le coude 63. Des conduits 10, 10' et 10" permettent d'évacuer l'eau présente respectivement dans les volumes V₈, V'₈ et V"₈. Les conduits 10, 10' et 10" sont pourvus de moyens non représentés de régulation d'écoulement qui sont commandés indépendamment, afin de contrôler de façon indépendantes le "gonflage" et le "dégonflage" des volumes V₈, V₈' et V₈".

Dans le troisième mode de réalisation de l'invention représenté à la figure 5, l'organe 8 est un ballon formé par une membrane déformable et souple 81 qui délimite à elle seule le volume intérieur V₈ de l'organe 8. Le volume V₈ est alimenté en air sous pression, à travers un orifice 814 ménagé dans la membrane 81, à partir d'une pompe de gavage 92 commandée par un signal S₃. Un tuyau 9 relie la pompe 92 au volume V₈. Un tuyau 10 relie une pompe d'aspiration 102 au volume V₈ à travers un second orifice 815 ménagé dans la membrane 81. La pompe 102 est commandée par un signal S₄.

La membrane 81 comprend une première portion 816, plaquée contre la portion externe 631 du coude 63 et dans laquelle sont ménagés les orifices 814 et 815, ainsi qu'une deuxième portion 817 raccordée à la première de façon étanche et qui se comporte sensiblement comme la membrane 81 du premier mode de réalisation. Il est ainsi possible, en contrôlant l'alimentation en air sous pression du volume V₈, d'agir sur la géométrie apparente du conduit 6, pour l'écoulement E transitant par le coude 63.

Selon une variante non représentée de l'invention, les zones centrales des portions 816 et 817 peuvent être reliées par des liens du type des liens 82 du premier mode de réalisation, ce qui permet de limiter la dilatation du ballon 8 sous l'effet de la pression de l'air fourni par la pompe 92.

Les caractéristiques des différents modes de réalisation envisagés ci-dessus peuvent être combinées entre elles. En particulier, de l'air peut être utilisé comme fluide de gonflage de l'organe 8 dans les modes de réalisation des figures 1 à 4 et de l'eau peut être utilisée dans le mode de réalisation de la figure 5. En fait, un fluide sous pression autre que de l'eau ou de l'air peut également être envisagé pour gonfler le volume fermé de taille variable défini par l'organe de régulation 8 de l'invention.

L'invention n'est pas limitée aux modes de réalisation décrits et peut être mise en oeuvre dans des parties du conduit 6 autres que celles représentées aux figures 1 à 5, notamment dans la partie amont 61 et aval et 62 ou sur l'intérieur du coude 63.

L'invention n'est pas limitée aux turbines Francis et peut être mise en oeuvre avec tout type de turbine à réaction L'invention est également utilisable dans les installations comprenant une pompe ou une turbine-pompe, au niveau des parties fixes, de ces installations. Dans ces cas également, l'organe à paroi déformable est utilisé pour moduler la section de passage de l'écoulement forcé d'eau en aval d'une partie tournante de la machine hydraulique.

## Revendications

1. Installation hydraulique (I) de conversion d'énergie définissant au moins un chemin (4, 5, 6) d'écoulement forcé (E) d'eau et comprenant au moins une machine (1), de type turbine, pompe ou turbine-pompe, un organe (8) pourvu d'au moins une paroi déformable (81, 81', 81") et délimitant au moins un volume fermé (V₈, V'₈, V"₈) de taille variable et des moyens (7, 9, 212, 91, 92) d'alimentation du volume fermé en fluide sous pression **caractérisée en ce que** l'organe (8) à paroi déformable est monté dans un conduit hydraulique (6) situé en aval d'une partie tournante (2) de la machine (1) et **en ce que** la paroi déformable (81, 81', 81") définit, localement et en aval de la partie tournante (2), une section modulable (S₆₃) de passage de l'écoulement (E) dans le conduit hydraulique (6).

2. Installation selon la revendication 1, **caractérisée en ce que** l'organe (8) comprend au moins une membrane déformable (81, 81', 81") fixée sur un élément structurel (631) de l'installation et définissant avec cet élément structurel le volume fermé de taille variable (V₈, V'₈, V"₈).

3. Installation selon la revendication 1, **caractérisée en ce que** l'organe est un ballon (8) formé par une membrane déformable (81) et délimitant à lui seul le volume fermé de taille variable (V₈, V'₈, V"₈).

4. Installation selon l'une des revendications 2 ou 3, **caractérisée en ce qu'**elle comprend au moins une attache (82) reliant une zone médiane de la membrane déformable (81, 81', 81") à l'élément structurel (631) ou deux zones (816, 817) de la membrane entre elles, cette attache étant apte à limiter la déformation de la membrane sous l'effet de la pression du fluide présent dans le volume fermé de taille variable (V₈, V'₈, V"₈).

5. Installation selon l'une des revendications précédentes, **caractérisée en ce que** l'organe (8) à paroi déformable (81, 81', 81") délimite plusieurs volumes fermés de taille variable (V₈, V'₈, V"₈) alimentés en fluide sous pression indépendamment (9, 9', 9") les uns des autres.

6. Installation selon l'une des revendications précédentes, **caractérisée en ce que** le conduit hydraulique (6) forme un coude (63) et l'organe (8) à paroi déformable (81, 81', 81") est disposé au niveau (631) de ce coude.

7. Installation selon la revendication 6, **caractérisée en ce que** l'organe (8) à paroi déformable (81, 81', 81") est disposé sur la portion externe (631) du coude (63).

8. Installation selon la revendication 6, **caractérisée en ce que** l'organe (8) à paroi déformable (81, 81', 81") est disposé sur la portion interne du coude (63).

9. Installation selon la revendication 6, **caractérisée en ce que** le conduit hydraulique (6) forme un coude (63) et l'organe (8) à paroi déformable (81, 81 ', 81") est disposé en amont (61) du coude (63).

10. Installation selon la revendication 6, **caractérisée en ce que** le conduit hydraulique (6) forme un coude (63) et l'organe (8) à paroi déformable (81, 81', 81") est disposé en aval (62) du coude (63).

11. Installation selon l'une des revendications précédentes, **caractérisée en ce que** le conduit hydraulique (6) situé en aval de la partie tournante (2) est au moins en partie divergent.

12. Installation selon l'une des revendications précédentes, **caractérisée en ce que** les moyens d'alimentation comprennent au moins un canal (9, 9', 9") reliant une source (91) commandée d'eau sous pression au volume fermé de taille variable (V₈, V'₈, V"₈) délimité par l'organe (8) à paroi déformable (81, 81', 81").

13. Installation selon l'une des revendications 1 à 11, **caractérisée en ce que** les moyens d'alimentation comprennent au moins un canal (9) reliant une source commandée (92) de fluide sous pression autre que de l'eau au volume fermé (V₈) délimité par l'organe (8) à paroi déformable (81, 81', 81 ").

14. Installation selon l'une des revendications précédentes, **caractérisée en ce qu'**elle comprend des moyens (10, 101, 102) d'évacuation du fluide sous pression à partir du volume fermé de taille variable (V₈, V'₈, V"₈) délimité par l'organe de régulation (8).

15. Procédé de commande d'une installation hydraulique (I) de conversion d'énergie définissant au moins un chemin (4, 5, 6) d'écoulement forcé (E) d'eau et comprenant une machine (1) de type turbine, pompe ou turbine-pompe, **caractérisé en ce qu'**il comprend une étape consistant à injecter (F₉) un fluide sous pression dans au moins un volume fermé (V₈, V'₈, V'₈) délimité par un organe (8) pourvu d'au moins une paroi déformable (81, 81', 81") et disposé dans un conduit hydraulique (6) situé en aval d'une partie tournante (2) de la machine (1), de façon à moduler une section de passage (S₆₃) de l'écoulement (E) dans le conduit hydraulique, en aval de la partie tournante.

## Patentansprüche

1. Hydraulikanlage (I) zur Energieumwandlung, die mindestens einen Weg (4, 5, 6) für einen erzwungenen Wasserabfluss (E) definiert und mindestens eine Maschine (1) vom Typ Turbine, Pumpe oder Turbinenpumpe, ein Element (8), das mit mindestens einer verformbaren Wand (81, 81', 81") versehen ist und mindestens ein geschlossenes Volumen (V₈, V'₈, V"₈) von variabler Größe und Mittel (7, 9, 212, 91, 92) zur Versorgung des geschlossenen Volumens mit einer Druckflüssigkeit umfasst, **dadurch gekennzeichnet, dass** das Element (8) mit verformbarer Wand in einer Hydraulikleitung (6) montiert ist, die sich stromabwärts zu einem rotierenden Teil (2) der Maschine (1) befindet, und dass die verformbare Wand (81, 81', 81") lokal und stromabwärts zu dem rotierenden Teil (2) einen modulierbaren Durchgangsquerschnitt (S₆₃) für den Abfluss (E) in der Hydraulikleitung (6) definiert.

2. Anlage nach Anspruch 1, **dadurch gekennzeichnet, dass** das Element (8) mindestens eine verformbare Membran (81, 81', 81") umfasst, die auf einem Strukturelement (631) der Anlage befestigt ist und mit diesem Strukturelement das geschlossene Volumen von variabler Größe (V₈, V'₈, V"₈) definiert.

3. Anlage nach Anspruch 1, **dadurch gekennzeichnet, dass** das Element ein Ballon (8) ist, der von einer verformbaren Membran (81) gebildet ist und alleine das geschlossene Volumen von variabler Größe (V₈, V'₈, V"₈) definiert.

4. Anlage nach einem der Ansprüche 2 oder 3, **dadurch gekennzeichnet, dass** sie mindestens eine Halterung (82) umfasst, die eine Mittelzone der verformbaren Membran (81, 81', 81") mit dem Strukturelement (631) oder zwei Zonen (816, 817) der Membran miteinander verbindet, wobei diese Halterung geeignet ist, die Verformung der Membran unter der Wirkung des Drucks der Flüssigkeit, die in dem geschlossenen Volumen von variabler Größe (V₈, V'₈, V"₈) vorhanden ist, zu begrenzen.

5. Anlage nach einem der vorhergehenden Ansprüche, **dadurch gekennzeichnet, dass** das Element (8) mit verformbarer Wand (81, 81', 81") mehrere geschlossene Volumina mit variabler Größe (V₈, V'₈, V"₈) begrenzt, die unabhängig (9, 9', 9") voneinander mit Druckflüssigkeit versorgt werden.

6. Anlage nach einem der vorhergehenden Ansprüche, **dadurch gekennzeichnet, dass** die Hydraulikleitung (6) einen Knick (63) bildet, und das Element (8) mit verformbarer Wand (81, 81', 81") im Bereich (631) dieses Knicks angeordnet ist.

7. Anlage nach Anspruch 6, **dadurch gekennzeichnet, dass** das Element (8) mit verformbarer Wand (81, 81', 81") auf dem äußeren Abschnitt (631) des Knicks (63) angeordnet ist.

8. Anlage nach Anspruch 6, **dadurch gekennzeichnet, dass** das Element (8) mit verformbarer Wand (81, 81', 81") auf dem inneren Abschnitt des Knicks (63) angeordnet ist.

9. Anlage nach Anspruch 6, **dadurch gekennzeichnet, dass** die Hydraulikleitung (6) einen Knick (63) bildet, und das Element (8) mit verformbarer Wand (81, 81', 81") stromaufwärts (61) zu dem Knick (63) angeordnet ist.

10. Anlage nach Anspruch 6, **dadurch gekennzeichnet, dass** die Hydraulikleitung (6) einen Knick (63) bildet, und das Element (8) mit verformbarer Wand (81, 81', 81") stromabwärts (62) zu dem Knick (63) angeordnet ist.

11. Anlage nach einem der vorhergehenden Ansprüche, **dadurch gekennzeichnet, dass** die Hydraulikleitung (6), die stromabwärts zu dem rotierenden Teil (2) angeordnet ist, zumindest teilweise divergent ist.

12. Anlage nach einem der vorhergehenden Ansprüche, **dadurch gekennzeichnet, dass** die Versorgungsmittel mindestens einen Kanal (9, 9', 9") umfassen, der eine gesteuerte Druckwasserquelle (91) mit dem geschlossenen Volumen von variabler Größe (V₈, V'₈, V"₈), das von dem Element (8) mit verformbarer Wand (81, 81', 81") begrenzt ist, verbindet.

13. Anlage nach einem der Ansprüche 1 bis 11, **dadurch gekennzeichnet, dass** die Versorgungsmittel mindestens einen Kanal (9) umfassen, der eine gesteuerte Quelle (92) von Druckflüssigkeit anders als Wasser mit dem geschlossenen Volumen (V₈), das von dem Element (8) mit verformbarer Wand (81, 81', 81") begrenzt ist, verbindet.

14. Anlage nach einem der vorhergehenden Ansprüche, **dadurch gekennzeichnet, dass** sie Mittel (10, 101, 102) zur Ableitung der Druckflüssigkeit von dem geschlossenen Volumen mit variabler Größe (V₈, V'₈, V"₈), das von dem Regelungselement (8) begrenzt ist, umfasst.

15. Verfahren zur Steuerung einer Hydraulikanlage (I) zur Energieumwandlung, die mindestens einen Weg (4, 5, 6) für einen erzwungenen Wasserabfluss (E) definiert und mindestens eine Maschine (1) vom Typ Turbine, Pumpe oder Turbinenpumpe umfasst, **dadurch gekennzeichnet, dass** es einen Schritt umfasst, der darin besteht, eine Druckflüssigkeit (F9) in mindestens ein geschlossenes Volumen (V8, V'8, V"8) einzuspritzen, das von einem Element (8) begrenzt ist, das mit mindestens einer verformbaren Wand (81, 81', 81") versehen und in einer Hydraulikleitung (6) angeordnet ist, die sich stromabwärts zu einem rotierenden Teil (2) der Maschine (1) befindet, um einen Durchgangsquerschnitt (S₆₃) für den Abfluss (E) in der Hydraulikleitung stromabwärts zu dem rotierenden Teil zu modulieren.

## Claims

1. A hydraulic installation (I) for converting energy defining at least one path (4, 5, 6) for a forced flow (E) of water and comprising at least one machine (1), of the turbine, pump or turbine-pump type, a member (8) provided at least one deformable wall (81, 81', 81") and delimiting at least one closed volume (V₈, V'₈, V"₈) of variable size and means (7, 9, 212, 91, 92) for supplying the closed volume with pressurised fluid **characterised in that** the member (8) with a deformable wall is mounted in a hydraulic duct (6) situated downstream of a rotating portion (2) of the machine (1) and **in that** the deformable wall (81, 81', 81") defines, locally and downstream of the rotating portion (2), an adjustable cross-section (S₆₃) for the flow (E) in the hydraulic duct (6).

2. The installation according to claim 1, **characterised in that** the member (8) comprises at least one deformable membrane (81, 81', 81") attached to a structural element (631) of the installation and defining with this structural element the closed volume of variable size (V₈, V'₈, V"₈).

3. The installation according to claim 1, **characterised in that** the member is a balloon (8) formed by a deformable membrane (81) and delimiting on its own the closed volume of variable size (V₈, V'₈, V"₈).

4. The installation according to one of the claims 2 or 3, **characterised in that** it comprises at least one attachment (82) linking one middle zone of the deformable membrane (81, 81', 81") to the structural element (631) or two zones (816, 817) of the membrane together, this attachment being capable of limiting the deformation of the membrane under the effect of the pressure of the fluid present in the closed volume of variable size (V₈, V'₈, V"₈).

5. The installation according to one of the previous claims, **characterised in that** the member (8) with deformable wall (81, 81', 81") delimits several closed volumes of variable size (V₈, V'₈, V"₈) supplied with pressurised fluid separately (9, 9', 9") one from the other.

6. The installation according to one of the previous claims, **characterised in that** the hydraulic duct (6) forms a bend (63) and the member (8) with a deformable wall (81, 81', 81") is placed at this (631) bend.

7. The installation according to claim 6, **characterised in that** the member (8) with a deformable wall (81, 81', 81") is placed on the outer portion (631) of the bend (63).

8. The installation according to claim 6, **characterised in that** the member (8) with a deformable wall (81, 81', 81") is placed on the inner portion of the bend (63).

9. The installation according to claim 6, **characterised in that** the hydraulic duct (6) forms a bend (63) and the member (8) with a deformable wall (81, 81', 81") is placed upstream (61) of the bend (63).

10. The installation according to claim 6, **characterised in that** the hydraulic duct (6) forms a bend (63) and the member (8) with a deformable wall (81, 81', 81") is placed downstream (62) of the bend (63).

11. The installation according to one of the previous claims, **characterised in that** the hydraulic duct (6) situated downstream of the rotating portion (2) is at least partly divergent.

12. The installation according to one of the previous claims, **characterised in that** the means of supply comprise at least one channel (9, 9', 9") linking one controlled source (91) of pressurised water to the closed volume of variable size (V₈, V'₈, V"₈) delimited by the member (8) with a deformable wall (81, 81', 81").

13. The installation according to the claims 1 to 11, **characterised in that** the means of supply comprise at least one channel (9) linking one controlled source (92) of pressurised water other than the water to the closed volume (V₈) delimited by the member (8) with a deformable wall (81, 81', 81").

14. The installation according to one of the previous claims, **characterised in that** it comprises means (10, 101, 102) for discharging the pressurised fluid from the closed volume of variable size (V₈, V'₈, V"₈) delimited by the regulating member (8).

15. A method for controlling a hydraulic installation (I) for converting energy defining at least one path (4, 5, 6) for a forced flow (E) of water and comprising a machine (1) of turbine, pump or turbine-pump type, **characterised in that** it comprises a step consisting in injecting (F₉) a pressurised fluid into at least one closed volume (V₈, V'₈, V"₈) delimited by a member (8) provided with at least one deformable wall (81, 81', 81") and placed in a hydraulic duct (6) situated downstream of a rotating portion (2) of the machine (1), in order to adjust a cross-section (S₆₃) for the flow (E) in the hydraulic duct, downstream of the rotating portion.
